# EUROPEAN PATENT APPLICATION

(11) **EP 4 651 286 A1**
(43) Date of publication of application: **19.11.2025**
(21) Application number: 24839910.7
(22) Date of filing: 31.05.2024
(51) Int. Cl.: H01M 50/262, H01M 50/293, H01M 50/358, H01M 50/271, H01M 50/211, H01M 50/249

(54) **BATTERY MODULE, AND BATTERY PACK AND VEHICLE INCLUDING SAME**

(30) Priority: 12.07.2023 KR 20230090620
(71) Applicant: LG Energy Solution, Ltd., Seoul 07335 (KR)
(72) Inventor: HEO, Sam-Hoe, Daejeon 34122 (KR); JUNG, Ki-Taek, Daejeon 34122 (KR); PARK, Dong-Ho, Daejeon 34122 (KR); PARK, Jeong-Jae, Daejeon 34122 (KR); CHOI, Wan-Sup, Daejeon 34122 (KR)
(74) Representative: BCKIP Part mbB
(86) International application number: PCT/KR2024/007496
(87) International publication number: WO 2025/014093

(57) **Abstract**

Disclosed is a battery module, which includes a plurality of battery cells; at least one blocking member configured to partition the plurality of battery cells; a module case configured to accommodate the plurality of battery cells and the blocking member; and a fixing portion provided on one side of the module case and configured to fix the blocking member.

## Description

### TECHNICAL FIELD

The present disclosure relates to a battery module, and a battery pack and a vehicle including the same. Specifically, the present disclosure relates to a battery module in which heat propagation within the battery module may be suppressed, and a battery pack and a vehicle including the same.

The present application claims priority to Korean Patent Application No. 10-2023-0090620 filed on July 12, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. If a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or battery pack may be set in various ways depending on the required output voltage or charge/discharge capacity.

Meanwhile, since battery cells involve chemical reactions during charging and discharging, the performance may deteriorate if the battery cells are used in a higher-temperature environment than an appropriate temperature, and if the heat is not controlled to an appropriate temperature, there is always a possibility of unexpected ignition or explosion. Also, the battery module has a structure in which the battery cells are intensively accommodated inside the module housing. Therefore, if a thermal event occurs in one battery cell, it is very dangerous because the discharged high-temperature gas and flame may transfer to adjacent battery cells, resulting in a series of battery cell explosions.

Therefore, even if a thermal event occurs in some battery cells within the battery module, there is a need to develop a structure that may suppress and delay heat propagation so as to prevent gas or flame from transferring to other battery cells within the battery module and causing thermal runaway by securely partitioning and separating the battery cells.

### DISCLOSURE

### Technical Problem

Therefore, the present disclosure is directed to providing a battery module that may effectively prevent or delay the propagation of thermal runaway between the battery cells by clearly partitioning and separating the battery cells.

The present disclosure is also directed to providing a battery pack and a vehicle that include the battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module, comprising: a plurality of battery cells; at least one blocking member configured to partition the plurality of battery cells; a module case configured to accommodate the plurality of battery cells and the blocking member; and a fixing portion provided on one side of the module case and configured to fix the blocking member.

The fixing portion may be configured such that one end of the blocking member is inserted therein.

At least one battery cell may be located between the blocking members adjacent to each other, and the blocking member may extend beyond the battery cell and is inserted into the fixing portion, and thus an airtight space may be formed by the blocking members adjacent to each other and the fixing portion.

The fixing portion may be configured to extend along a longitudinal direction of the blocking member.

The fixing portion may include a first fixing portion and a second fixing portion provided to face each other, and one end of the blocking member may be inserted between the first fixing portion and the second fixing portion.

The first fixing portion and the second fixing portion may be provided to protrude from one side of the module case, respectively, and a gap between the first fixing portion and the second fixing portion may be smaller than a thickness of the blocking member.

The gap between the first fixing portion and the second fixing portion may be configured to increase along a direction protruding from the module case.

The first fixing portion and the second fixing portion may include a rounded surface provided to contact an upper end of the blocking member.

The first fixing portion and the second fixing portion may include an inclined surface provided to contact an upper end of the blocking member.

The module case may include a top plate that forms an upper surface of the module case, and the fixing portion may be provided on a bottom surface of the top plate and configured to fix an upper end of the blocking member.

The blocking member may be provided in plurality along one direction, and a plurality of venting holes located between the blocking members adjacent to each other to discharge gas generated from the battery cell may be formed in the top plate.

The fixing portion may be provided between the venting holes adjacent to each other and provided in plurality along one direction.

The fixing portion may be formed integrally with the top plate.

The fixing portion may be provided as a groove formed by recessing at least a part of the top plate.

The battery cell may be a pouch-type battery cell with sealing portions being provided on three sides among four sides thereof, the battery cell may be accommodated within the module case so that a side thereof not containing the sealing portion faces downward, and the blocking member may extend upward from the battery cell and is fixed to the fixing portion.

In addition, according to an embodiment of the present disclosure, there is provided a battery pack including the battery module according to the present disclosure.

In addition, according to an embodiment of the present disclosure, there is provided a vehicle including the battery pack according to the present disclosure.

### Advantageous Effects

According to one aspect of the present disclosure, since the battery cells within the battery module are securely partitioned and separated, even if a thermal event occurs in some battery cells within the battery module, it is possible to effectively prevent or delay the gas or flame from transferring to other battery cells within the battery module and causing thermal runaway. Thereby, the safety and reliability of the battery module may be guaranteed.

Also, according to another aspect of the present disclosure, high-temperature gas or flame generated from the battery cells within the battery module may be smoothly discharged to the outside of the battery module.

In addition, according to still another aspect of the present disclosure, it is possible to prevent or delay an event due to thermal runaway of a battery pack including a plurality of battery modules or a device to which the battery pack is mounted, such as fire or explosion.

Moreover, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery module according to an embodiment of the present disclosure.
FIG. 2 is an exploded perspective view showing the battery module according to an embodiment of the present disclosure.
FIG. 3 is a perspective view showing a bottom surface of a top plate included in the battery module according to an embodiment of the present disclosure.
FIG. 4 is a cross-sectional view, taken along line I-I' of FIG. 1, showing a direction in which gas or the like is discharged when thermal runaway occurs in the battery module.
FIG. 5 is a cross-sectional view, taken along line II-II' of FIG. 4.
FIG. 6 is a Y-Z cross-sectional view showing the battery module according to an embodiment of the present disclosure.
FIG. 7 is an enlarged view showing a part A of FIG. 4, for illustrating the structure of a fixing portion included in the battery module according to an embodiment of the present disclosure.
FIG. 8 is a drawing for illustrating the structure of a fixing portion included in a battery module according to another embodiment of the present disclosure.
FIG. 9 is a drawing for illustrating the structure of a fixing portion included in a battery module according to still another embodiment of the present disclosure.
FIG. 10 is a schematic perspective view showing a battery pack including the battery module according to an embodiment of the present disclosure.
FIG. 11 is a perspective view showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Also, the present disclosure includes many different embodiments. Substantially identical or similar components for these embodiments will be described in duplication, and different features will be described in detail.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the left/right direction, the Y-axis direction may indicate the forward/rearward direction, namely the longitudinal direction of the battery cell, perpendicular to the X-axis direction on the flat plane (X-Y plane), and the Z-axis direction may indicate the upward/downward direction (vertical direction), namely the height direction of the battery cell, perpendicular to both the X-axis direction and the Y-axis direction.

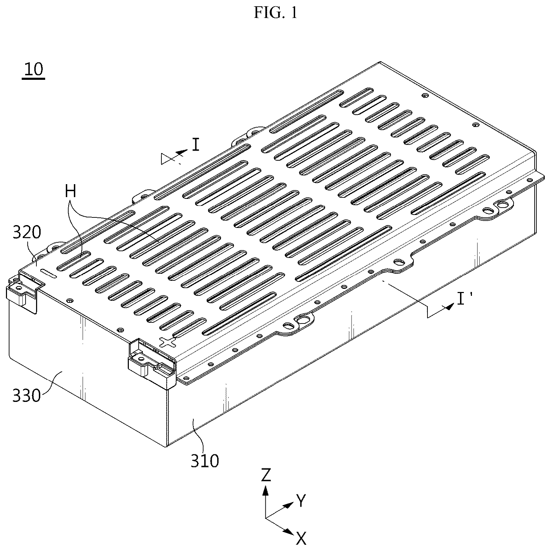

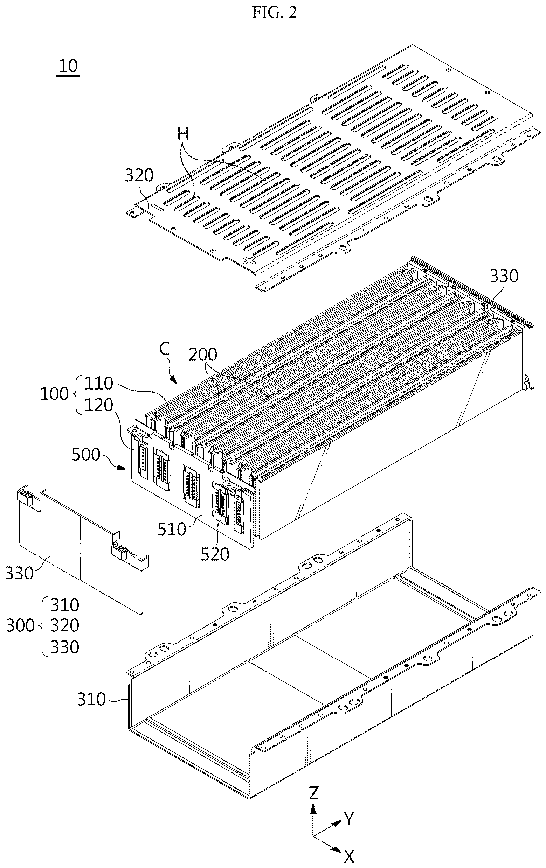

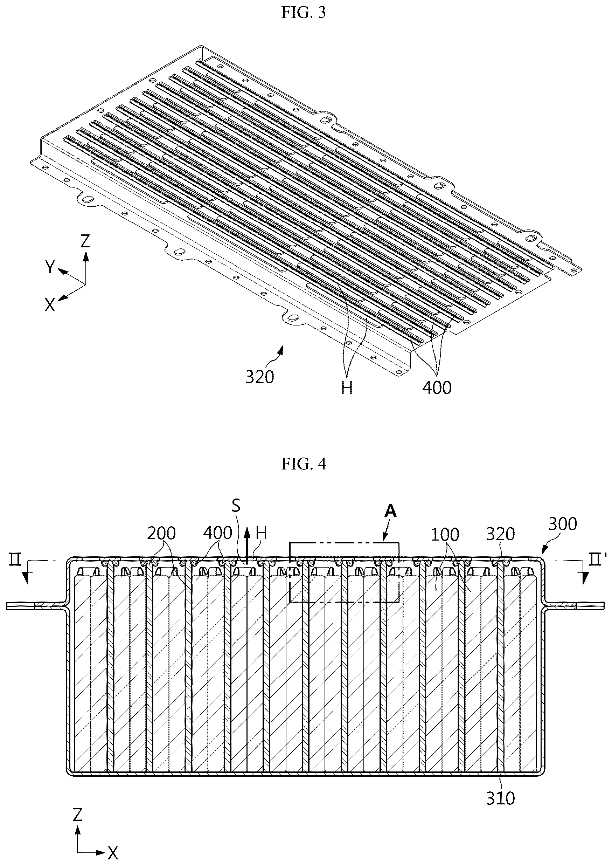

FIG. 1 is a perspective view showing a battery module according to an embodiment of the present disclosure, and FIG. 2 is an exploded perspective view showing the battery module according to an embodiment of the present disclosure. Also, FIG. 3 is a perspective view showing a bottom surface of a top plate included in the battery module according to an embodiment of the present disclosure. In addition, FIG. 4 is a cross-sectional view, taken along line I-I' of FIG. 1, showing a direction in which gas or the like is discharged when thermal runaway occurs in the battery module.

Referring to FIGS. 1 to 4, the battery module 10 according to an embodiment of the present disclosure may include a battery cell 100, a blocking member 200, a module case 300, and a fixing portion 400.

The battery cell 100 may be provided in plurality. The plurality of battery cells 100 may be stacked in one direction. For example, as shown in FIG. 2, the plurality of battery cells 100 may be stacked along the left and right direction (X-axis direction).

The plurality of battery cells 100 may be pouch-type secondary batteries. The plurality of battery cells 100 may include an electrode assembly and a cell case 110 that accommodates the electrode assembly. The cell case 110 may accommodate the electrode assembly in an accommodation portion, and the border around the accommodation portion may be heat-sealed to form a sealing portion. The sealing portion may be provided on three sides among four sides of the battery cell 100.

Also, the plurality of battery cells 100 may include electrode leads 120, respectively. The electrode lead 120 is connected to the electrode assembly and may be drawn out of the cell case 110 to function as an electrode terminal.

A pair of electrode leads 120 may be provided, and the pair of electrode leads 120 may extend from both ends of the battery cell 100, that is, in the longitudinal direction (the ±Y-axis directions). In this case, the pair of electrode leads 120 may be a positive electrode lead and a negative electrode lead. If necessary, the battery cell 100 may have two electrode leads 120 disposed only at one end thereof in the Y-axis direction, for example, the +Y-axis direction.

The battery cell 100 may be provided in a standing state so that its side not containing the sealing portion faces downward. As shown in FIG. 2 or the like, the plurality of battery cells 100 may be disposed side by side in the left/right direction (X-axis direction) while standing in the vertical direction (Z-axis direction). In this case, a sealing portion of each battery cell 100 may be directed in the forward/backward direction (Y-axis direction) and the upward/downward direction (Z-axis direction), and a storage portion may be directed in the left/right direction (X-axis direction). If the battery cells 100 are arranged like this, it is easy to control the venting direction to any side, and cooling performance may be secured by performing edge cooling through the side not containing the sealing portion.

The present disclosure is not limited to a specific type or form of battery cell 100, and various battery cells 100 known at the time of filing of this application may be applied. Although this embodiment will be described based on a pouch-type secondary battery, as shown in the drawing, that has high energy density and is easy to stack, a cylindrical or prismatic secondary battery may be applied to the battery cell 100.

The battery module 10 according to an embodiment of the present disclosure may include a blocking member 200. The blocking member 200 may be provided between the battery cells 100 and configured to partition the plurality of battery cells 100. In particular, at least one blocking member 200 may be included in one battery module 10. The blocking member 200 may be provided in plurality along one direction in which the battery cells 100 are arranged.

The blocking member 200 may be disposed for at least one battery cell 100. Accordingly, the plurality of battery cells 100 and the blocking member 200 provided between them may form one cell stack C.

The blocking member 200 may include an insulating pad with a smaller thickness than the battery cell 100. The blocking member 200 may be made of a material with excellent heat resistance and/or fire resistance performance. Alternatively, the blocking member 200 may be provided in the form of a compressive pad made of, for example, silicone or aerogel.

According to the embodiment of the present disclosure, the battery cells 100 may be partitioned or separated to prevent gas or flame from passing to other blocking members 200 adjacent to the blocking member 200. Also, according to the embodiment of the present disclosure, the blocking member 200 may contribute to the structural rigidity of the battery cells 100 by compressing the battery cells 100 when a swelling phenomenon occurs in the battery cells 100.

Meanwhile, referring to FIG. 2, the module case 300 may be configured to accommodate the plurality of battery cells 100 and the blocking members 200, namely the cell stack C. Specifically, an inner space may be formed in the module case 300, and the inner space may be configured to accommodate the plurality of battery cells 100 and the blocking member 200.

Specifically, the module case 300 may include a case body 310. For example, the case body 310 may be provided as a U-frame. If the case body 310 is provided as a U-frame, the case body 310 may be provided to cover both sides and the lower surface of the cell stack C. The case body 310 may include a left plate and a right plate that cover both sides of the cell stack C, and a lower plate that covers the lower surface of the cell stack C. Also, the left plate, the right plate, and the lower plate may be configured to be integrated with each other. At this time, the top surface and the front and rear surfaces of the case body 310 may be open. The case body 310 may be made of a metal material with rigidity and heat resistance to physically or chemically protect the accommodated battery cells 100.

In addition, the case body 310 may be prepared so that the cell stack C may be inserted therein along one direction. For example, the cell stack C may be inserted into the case body 310 along the front and rear direction (Y-axis direction). That is, the case body 310 may be configured so that the cell stack C may be inserted therein in a slide manner.

The module case 300 may further include a top plate 320. The top plate 320 may be provided to form the upper surface of the module case 300. When the case body 310 is provided as a U-frame, the top plate 320 may be coupled to the open upper surface of the case body 310. The top plate 320 may be coupled to the case body 310 by welding. At this time, the top plate 320 and the case body 310 coupled to each other may form a square tube with the front and rear sides opened.

Meanwhile, the module case 300 may include an end plate 330 provided on the open front and rear sides of the case body 310. The end plate 330 may be coupled to the case body 310 by welding. Meanwhile, although not shown for convenience, the end plate 330 may, for example, be made of an insulating material at its inner side and made of a metal material at its outer side. Also, the end plate 330 may partially have a hole or slit to expose a component, which needs to be exposed to the outside, such as the positive and negative terminals or connectors of the battery module 10.

In addition, the module case 300 may be formed in various other forms. For example, the module case 300 may include a box-shaped lower case with a top opening and an upper cover that closes the top opening of the lower case. At this time, the lower case may be configured so that left and right plates covering both sides of the cell stack C and front and rear plates covering the front and rear sides of the cell stack C are all integrated.

Alternatively, the module case 300 may be provided as a mono frame. For example, the case body 310 may be configured in the form of a square tube that includes an upper surface, a lower surface, a left side, and a right side, with the front and rear sides opened. According to the module case 300 including the mono frame, the cell stack C and the bus bar frame assembly 500 may be assembled and inserted into the mono frame in a press-fitting manner, and the end plates 330 may be connected to both side openings of the mono frame to assemble the battery module 10. At this time, for press-fitting, there may be almost no gap between the lower surface and the top plate 320 of the case body 310 and the battery cells 100, and there may be almost no gap between both sides of the case body 310 and both side portions of the battery cells 100.

Referring to FIG. 3 mainly, a venting hole H may be formed in the top plate 320. The venting hole H may be provided to discharge a venting gas generated from the battery cell 100 to the outside of the module case 300. The venting hole H may be formed in the module case 300, and may allow directional venting in one direction.

For example, as shown in FIG. 3, the venting hole H may be formed in the top plate 320, and directional venting upward from the battery module 10 may be performed through the venting hole H. Specifically, the venting hole H may be provided in plurality, and the plurality of venting holes H may be provided at regular intervals in the horizontal direction (X-axis, Y-axis direction).

The plurality of venting holes H may be located between neighboring blocking members 200 among the plurality of blocking members 200 arranged in one direction.

In other words, the venting hole H may be provided above at least one battery cell 100 provided between neighboring blocking members 200. For example, as shown in FIG. 3, in the battery module 10 according to an embodiment of the present disclosure, the blocking member 200 may be disposed for every two battery cells 100, and the plurality of venting holes H may be formed above the battery cells 100 provided between the blocking members 200 in a row along the longitudinal direction (Y-axis direction) of the battery cells 100.

In this way, the venting hole H provided in the top plate 320 may be provided to discharge gas or flame generated inside the battery module 10 to the outside of the battery module 10 when thermal runaway occurs in the battery module 10. The remaining parts of the module case 300 except for the venting hole H are sealed, and gas or flame may be discharged straightly toward the venting hole H.

According to the embodiment of the present disclosure, even if a thermal event occurs at any location of the battery cell 100, gas or flame generated from the battery cell 100 is discharged to the outside of the battery module 10 through a specific venting hole H provided above the battery cell 100, so smooth venting is possible.

Meanwhile, referring to FIG. 2, the battery module 10 of the present disclosure may further include a bus bar frame assembly 500. The bus bar frame assembly 500 may be provided inside the module case 300 and configured to cover at least one side of the cell stack C. In this embodiment, as shown in FIG. 2, the bus bar frame assembly 500 may be coupled to the front and rear sides of the cell stack C.

The bus bar frame assembly 500 may include a bus bar frame 510 and a plurality of bus bars 520. The bus bar frame 510 may be provided to be substantially coupled to the front side and the rear side of the cell stack C. The bus bar frame 510 may be provided with slits through which the electrode lead 120 of the battery cell 100 may extend in the +Y-axis or -Y-axis direction. In addition, the bus bar frame 510 may be made of, for example, a plastic material with electrical insulation properties, and may be configured such that the bus bar 520 may be attached to its outer surface.

In addition, the bus bar frame 510 may be press-fitted to the front or rear end of the cell stack C.

Meanwhile, the plurality of bus bars 520 are means for connecting the battery cells 100 in series and/or parallel, and may be made of a metal material such as copper, aluminum, nickel, or the like, and may be configured in the form of a bar. The electrode leads 120 of the battery cells 100 may extend to the outside of the bus bar frame 510 by passing through the slits of the bus bar frame 510, and the extended portion may be attached to the surface of the bus bar 520 by welding or other methods. When the electrode leads 120 of the battery cells 100 and the bus bars 520 are welded in a predetermined pattern at the front and rear ends of the cell stack C, the battery cells 100 may be connected in series and/or parallel.

In this embodiment, referring to FIG. 2, the module case 300 has an inner space to accommodate the cell stack C and the bus bar frame assembly 500 and serves to protect the cell stack C from the outside.

Meanwhile, in consideration of convenience in assembly or assembly tolerance, one side of the module case 300 and the blocking member 200 may be spaced apart by a predetermined gap. In such a case, when a thermal event occurs in one battery cell 100, there is a risk that the venting gas or flame may be transferred to other adjacent battery cells 100 through a certain gap formed between the blocking member 200 and the module case 300. Even if a gap is not formed between the blocking member 200 and one surface of the module case 300, if there is no device to separately fix the blocking member 200, bending deformation may occur in the blocking member 200 due to the pressure of venting gas or flame, which may cause the blocking member 200 to be moved in the left/right direction. Accordingly, a gap is formed between the blocking member 200 and the module case 300, and there is a possibility that the venting gas or the like is transferred to other adjacent battery cells 100 through the gap.

Accordingly, the battery module 10 according to an embodiment of the present disclosure may include a fixing portion 400. Referring to FIG. 4, the fixing portion 400 may be provided in the module case 300 and configured to fix the blocking member 200. The fixing portion 400 may be made of a material with excellent heat resistance and/or fire resistance so that an airtight structure may be maintained even under high heat and pressure. For example, the fixing portion 400 may be made of a fire-resistant plastic material.

According to the embodiment of the present disclosure, the battery cells 100 may be securely partitioned and separated by minimizing the space between the module case 300 and the blocking member 200. As a result, when a thermal event occurs in the battery cell 100, venting gas or flame is prevented from transferring to the adjacent battery cells 100, thereby ensuring the safety and reliability of the battery module 10.

Also, according to the embodiment of the present disclosure, since the blocking member 200 is fixed to the module case 300 by the fixing portion 400, it is possible to suppress bending deformation in the blocking member 200. Even if a thermal event occurs, the resulting high-temperature, high-pressure venting gas or flame may push out the blocking member 200, reducing the possibility of the venting gas or flame being transferred to other battery cells 100. As a result, when thermal runaway propagation occurs in the battery module 10, thermal runaway propagation between the battery cells 100 may be effectively prevented or delayed.

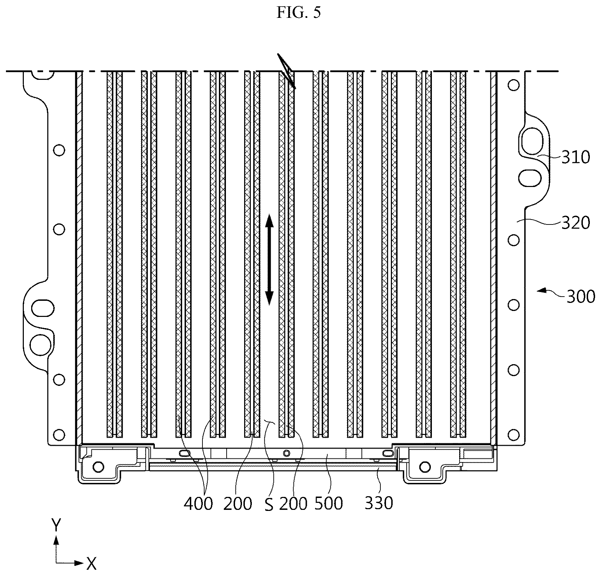

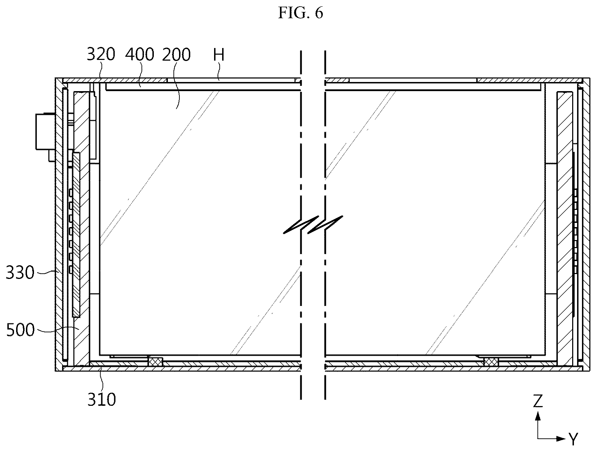

FIG. 5 is a cross-sectional view, taken along line II-II' of FIG. 4, and FIG. 6 is a Y-Z cross-sectional view showing the battery module according to an embodiment of the present disclosure.

The fixing portion 400 may be configured so that one end of the blocking member 200 is inserted therein. The number of the fixing portions 400 may correspond to the number of blocking members 200. At this time, the blocking member 200 may be provided to extend further in the vertical direction than the battery cell 100. That is, the height of the blocking member 200 in the vertical direction may be longer than the height of the battery cell 100 in the vertical direction. According to the embodiment of the present disclosure, the blocking member 200 may be inserted into the fixing portion 400 and supported at both sides, so it is possible to prevent one end of the blocking member 200 from moving in the left/right direction. As a result, the plurality of battery cells 100 may be partitioned and separated more securely.

Referring to FIGS. 4 and 5, the blocking member 200 is inserted into and fixed to the fixing portion 400, so that an airtight space S may be formed by the fixing portion 400 and neighboring blocking member 200 among the plurality of blocking members 200. Here, airtightness is a concept meaning that the movement of a venting gas is restricted between the battery cells 100 adjacent to each other in the left and right direction (X-axis direction) with one blocking member 200 being interposed therebetween. The airtight space S is provided to communicate with the venting hole H, so that gas generated from the battery cell 100 does not move toward other battery cells 100, but is guided only to the venting hole H and discharged.

At this time, the fixing portion 400 may be provided in plurality along one direction. The one direction may be defined as a direction in which the blocking members 200 and the battery cells 100 are stacked, namely the left and right direction (X-axis direction). The fixing portion 400 may be provided between neighboring venting holes H among the plurality of venting holes H. Gas or flame emitted from the battery cell 100 accommodated between neighboring blocking members 200 may be discharged to the outside of the module case 300 only through the venting hole H located between the neighboring blocking members 200 by the fixing portion 400.

Also, referring to FIG. 6, the fixing portion 400 may be configured to extend along the longitudinal direction (Y-axis direction) of the blocking member 200. The fixing portion 400 may be provided to have the same shape or length as the blocking member 200. The length of the fixing portion 400 may be provided to correspond to the length of the blocking member 200. As a result, both sides of the battery cell 100 may be blocked by the fixing portion 400 and the blocking member 200, thereby preventing movement of gas or the like.

According to the embodiment of the present disclosure, since the airtight space S is formed by the blocking member 200 and the fixing portion 400, the venting gas or the like may be discharged in a target direction, such as the direction in which the venting hole H is formed (arrow direction in FIG. 4). In other words, since the outer circumference of the venting hole H is blocked, upward directional venting of the gas may be induced more effectively. If the gas generated inside the battery module 10 is discharged in various directions, the time for the venting gas to be discharged may be prolonged, which may significantly reduce the safety of the battery module 10. According to this embodiment, the venting gas is quickly guided to the venting hole H, thereby preventing the venting gas from spreading in all directions inside the module case 300.

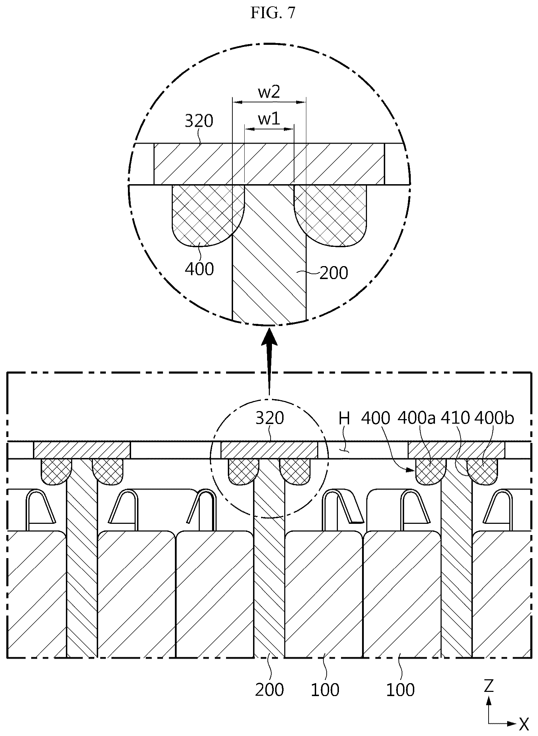

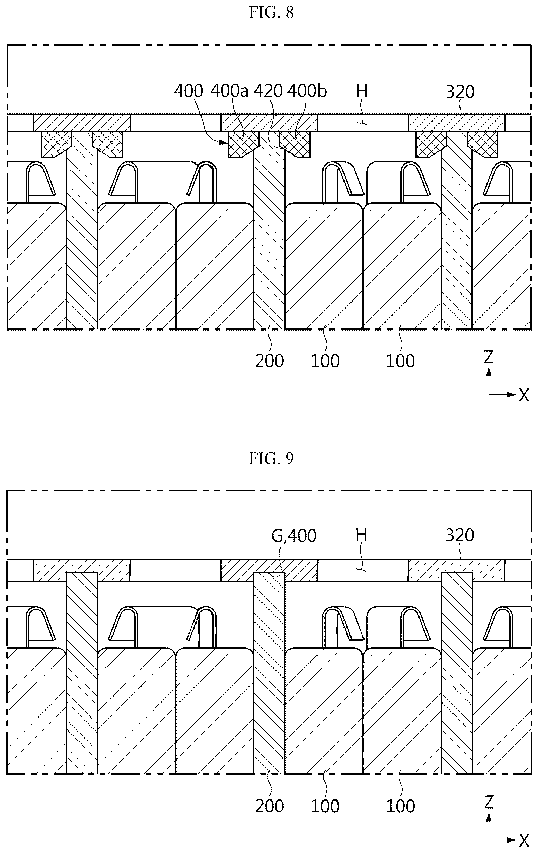

FIG. 7 is an enlarged view showing a part A of FIG. 4, for illustrating the structure of a fixing portion included in the battery module according to an embodiment of the present disclosure, and FIG. 8 is a drawing for illustrating the structure of a fixing portion included in a battery module according to another embodiment of the present disclosure. Also, FIG. 9 is a drawing for illustrating the structure of a fixing portion included in a battery module according to still another embodiment of the present disclosure.

Referring to FIGS. 7 to 9, the fixing portion 400 may be provided on the bottom surface of the top plate 320 to fix the upper end of the blocking member 200. The fixing portion 400 is located inside the battery module 10 not to increase the height of the battery module 10 and does not change the appearance of the battery module 10. Also, the fixing portion 400 may be located in an empty space within the battery module 10 so as not to affect the energy density of the battery module 10.

At this time, one side of the module case 300, namely the top plate 320, and the blocking member 200, may be provided to contact each other. Referring to FIG. 7, the blocking member 200 may be provided to extend further upward than the battery cell 100, and the upper end of the blocking member 200 may be provided to be inserted into the fixing portion 400. According to the embodiment of the present disclosure, since the gap between the blocking member 200 and the top plate 320 is minimized, it is possible to reduce the space through which a venting gas may flow, thereby preventing the propagation of thermal runaway to other adjacent battery cells 100.

The structure of the fixing portion 400 will be described in detail with reference to FIG. 7. The fixing portion 400 may include a first fixing portion 400a and a second fixing portion 400b that are provided to face each other. Each of the first fixing portion 400a and the second fixing portion 400b may be provided to protrude from one side of the module case 300. For example, as shown in FIG. 6, the first fixing portion 400a and the second fixing portion 400b may be provided to protrude downward from the lower surface of the top plate 320. The protruding lengths of the first fixing portion 400a and the second fixing portion 400b may be the same.

According to the embodiment of the present disclosure, the first fixing portion 400a and the second fixing portion 400b may not be formed integrally, but the gap w1 of a predetermined size may be provided between the first fixing portion 400a and the second fixing portion 400b in a region close to the top plate 320, so that the entire structure is not distorted and absorbs the deformation stress to maintain structural robustness even if the first fixing portion 400a and the second fixing portion 400b are deformed.

One end of the blocking member 200 may be inserted between the first fixing portion 400a and the second fixing portion 400b. At this time, the gap w1 between the first fixing portion 400a and the second fixing portion 400b may be smaller than the thickness w2 of the blocking member 200 (w1<w2).

Accordingly, one end of the blocking member 200 may be configured to be press-fitted between the first fixing portion 400a and the second fixing portion 400b. According to the embodiment of the present disclosure, the movement of the blocking member 200 in the left/right direction is further suppressed, so that the arrangement state of the battery cells 100 and the blocking members 200 may be maintained stably.

Referring to FIGS. 7 and 8, the gap w1 between the first fixing portion 400a and the second fixing portion 400b may be configured to increase along the direction protruding from the module case 300. According to the embodiment of the present disclosure, one end of the blocking member 200 may be fixed at the lower side of the first fixing portion 400a and the second fixing portion 400b. According to the embodiment of the present disclosure, the gap w1 between the first fixing portion 400a and the second fixing portion 400b may be increased along the direction protruding from the module case 300, so that the blocking member 200 is stably inserted into the increased gap.

The first fixing portion 400a and the second fixing portion 400b may be prepared by processing two block-shaped structures. For example, as shown in FIG. 7, the first fixing portion 400a and the second fixing portion 400b may include a rounded surface 410 provided to contact the upper end of the blocking member 200. The rounded surface 410 may be formed by rounding the edges of the block surfaces where the first fixing portion 400a and the second fixing portion 400b face each other. According to the embodiment of the present disclosure, the blocking member 200 may be stably inserted into the fixing portion 400 by bringing the blocking member 200 into contact between the rounded surfaces 410.

Alternatively, as shown in FIG. 8, the first fixing portion 400a and the second fixing portion 400b may include an inclined surface 420 provided to contact the upper end of the blocking member 200. The inclined surface 420 may be formed by chamfering a portion of the block surface where the first fixing portion 400a and the second fixing portion 400b face each other. According to the embodiment of the present disclosure, since the inclined surface 420 and the vertex of the blocking member 200 come into contact with each other, a pushing force may act. Accordingly, when gas pressure acts on the blocking member 200, the fixing force between the blocking member 200 and the fixing portion 400 may be further improved.

The first fixing portion 400a and the second fixing portion 400b may be manufactured as separate structures from the top plate 320 and may be adhered, fitted, or bolted to the top plate 320. Alternatively, the first fixing portion 400a and the second fixing portion 400b may be integrally formed with the top plate 320.

Referring to FIG. 9, the fixing portion 400 may be formed integrally with the top plate 320. That is, the fixing portion 400 may be integrally provided on the bottom surface of the top plate 320.

Specifically, the top plate 320 may be extruded so that the fixing portion 400 is provided integrally with the top plate 320. As the top plate 320 is manufactured by extrusion, the fixing portion 400 may be formed to extend in a straight line along the extrusion direction (Y-axis direction in FIG. 9).

According to the embodiment of the present disclosure, since the fixing portion 400 is integrally provided with the top plate 320, the process of coupling the fixing portion 400 to the top plate 320 is omitted, and defects in the coupling portion of the fixing portion 400 and the top plate 320 may be minimized.

At this time, the fixing portion 400 may be provided as a groove formed by recessing at least a part of the top plate 320. The blocking member 200 may be inserted into the groove G. In this case, the upper end of the blocking member 200 may be provided in close contact with the groove G without any gap.

According to this embodiment of the present disclosure, since the end of the blocking member 200 is inserted into the groove G of the top plate 320, the fixing force of the blocking member 200 may be further improved. In particular, when venting gas is generated from a specific battery cell 100, movement of the blocking member 200 in the left/right direction may be suppressed by the pressure of the venting gas.

Also, in this embodiment, the sealing force between the end of the blocking member 200 and the fixing portion 400 of the top plate 320 may be stably secured. Therefore, according to this embodiment, the performance of preventing heat spread between the cells by the blocking member 200 may be further improved, and the arrangement state of the battery cells 100 and the blocking members 200 may be maintained stably.

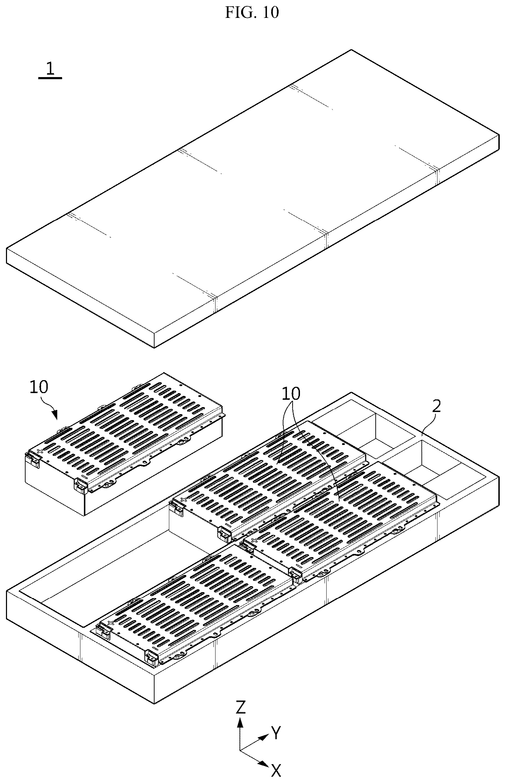

FIG. 10 is a schematic perspective view showing a battery pack including the battery module according to an embodiment of the present disclosure.

Referring to FIG. 10, a battery pack 1 according to an embodiment of the present disclosure may include one or more battery modules 10 according to an embodiment of the present disclosure described above. The battery pack 1 according to the present disclosure may further include a BMS (Battery Management System), a current sensor a fuse, or the like for integrated control of charging and discharging of one or more battery modules 10, and a pack case 20 for accommodating the above-mentioned elements.

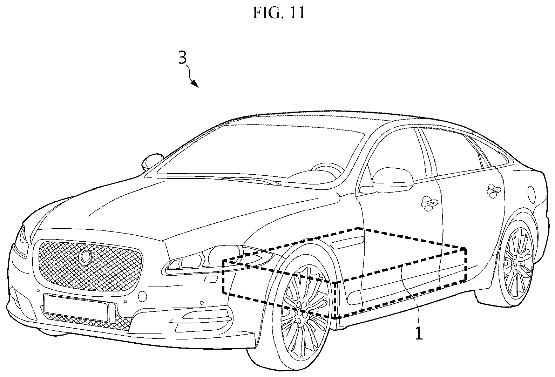

FIG. 11 is a perspective view showing a vehicle including the battery pack according to an embodiment of the present disclosure.

Referring to FIG. 11, the vehicle 3 according to an embodiment of the present disclosure may include one or more battery packs 1 according to an embodiment of the present disclosure or one or more battery modules 10 according to an embodiment of the present disclosure. The vehicle 3 according to the present disclosure may be, for example, an electric vehicle, a hybrid vehicle or a plug-in hybrid vehicle. The vehicle 3 includes a four-wheeled vehicle and a two-wheeled vehicle. The vehicle 3 drives by receiving power from the battery pack 1 or the battery module 10 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module, comprising:
a plurality of battery cells;
at least one blocking member configured to partition the plurality of battery cells;
a module case configured to accommodate the plurality of battery cells and the blocking member; and
a fixing portion provided on one side of the module case and configured to fix the blocking member.

2. The battery module according to claim 1,
wherein the fixing portion is configured such that one end of the blocking member is inserted therein.

3. The battery module according to claim 2,
wherein at least one battery cell is located between the blocking members adjacent to each other, and
wherein the blocking member extends beyond the battery cell and is inserted into the fixing portion,
whereby an airtight space is formed by the blocking members adjacent to each other and the fixing portion.

4. The battery module according to claim 1,
wherein the fixing portion is configured to extend along a longitudinal direction of the blocking member.

5. The battery module according to claim 1,
wherein the fixing portion includes a first fixing portion and a second fixing portion provided to face each other, and
wherein one end of the blocking member is inserted between the first fixing portion and the second fixing portion.

6. The battery module according to claim 5,
wherein the first fixing portion and the second fixing portion are provided to protrude from one side of the module case, respectively, and
wherein a gap between the first fixing portion and the second fixing portion is smaller than a thickness of the blocking member.

7. The battery module according to claim 6,
wherein the gap between the first fixing portion and the second fixing portion is configured to increase along a direction protruding from the module case.

8. The battery module according to claim 7,
wherein the first fixing portion and the second fixing portion include a rounded surface provided to contact an upper end of the blocking member.

9. The battery module according to claim 5,
wherein the first fixing portion and the second fixing portion include an inclined surface provided to contact an upper end of the blocking member.

10. The battery module according to claim 1,
wherein the module case includes a top plate that forms an upper surface of the module case, and
wherein the fixing portion is provided on a bottom surface of the top plate and configured to fix an upper end of the blocking member.

11. The battery module according to claim 10,
wherein the blocking member is provided in plurality along one direction, and
wherein a plurality of venting holes located between the blocking members adjacent to each other to discharge gas generated from the battery cell are formed in the top plate.

12. The battery module according to claim 11,
wherein the fixing portion is provided between the venting holes adjacent to each other and provided in plurality along one direction.

13. The battery module according to claim 10,
wherein the fixing portion is formed integrally with the top plate.

14. The battery module according to claim 13,
wherein the fixing portion is provided as a groove formed by recessing at least a part of the top plate.

15. The battery module according to claim 1,
wherein the battery cell is a pouch-type battery cell with sealing portions being provided on three sides among four sides thereof,
wherein the battery cell is accommodated within the module case so that a side thereof not containing the sealing portion faces downward, and
wherein the blocking member extends upward from the battery cell and is fixed to the fixing portion.

16. A battery pack, comprising at least one battery module according to any one of claims 1 to 15.

17. A vehicle, comprising at least one battery pack according to claim 16.
